# EUROPÄISCHE PATENTANMELDUNG

(11) **EP 4 477 504 A1**
(43) Veröffentlichungstag der Anmeldung: **18.12.2024**
(21) Anmeldenummer: 23179765.5
(22) Anmeldetag: 16.06.2023
(51) Int. Cl.: B62D 33/04, B61D 3/04, B61D 3/02, B60P 3/04, B60P 3/08, B60P 1/02, B60R 13/01

(54) **LADEEBENENVORRICHTUNG, FAHRZEUGAUFBAU UND FAHRZEUG**

(71) Anmelder: Schmitz Cargobull AG, 48341 Altenberge (DE)
(72) Erfinder: SCHÄFER, Dennis, 46354 Südlohn (DE)
(74) Vertreter: Liedtke & Partner Patentanwälte

(57) **Zusammenfassung**

Die Erfindung betrifft eine Ladeebenenvorrichtung (6) für einen Fahrzeugaufbau (1). Ein erstes Ladeebenenelement (7) weist an einem einer Ebenen-Schwenkachse (A1) abgewandten Ende zumindest eine Schwenk-Befestigungsvorrichtung (14, 15) auf, mittels welcher dieses um eine parallel zur Ebenen-Schwenkachse (A1) und zu einem Ladeboden (2) des Fahrzeugaufbaus (1) verlaufende Bord-Schwenkachse (A2) schwenkbar an einer ersten Bordwand (4) des Fahrzeugaufbaus (1) befestigt oder befestigbar ist. Ein zweites Ladeebenenelement (8) weist an einem der Ebenen-Schwenkachse (A1) abgewandten Ende zumindest eine Befestigungsvorrichtung (18, 19) auf, mittels welcher dieses in einer Nutzposition an einer der ersten Bordwand (4) gegenüberliegenden zweiten Bordwand (5) des Fahrzeugaufbaus (1) befestigbar ist. In einer Verstauposition liegt das erste Ladeebenenelement (7) ausgehend von der Bord-Schwenkachse (A2) nach oben gerichtet mit einer Oberseite an der ersten Bordwand (4) an und das zweite Ladeebenenelement (8) liegt ausgehend von der Ebenen-Schwenkachse (A1) nach unten gerichtet mit einer Unterseite an einer Unterseite des ersten Ladeebenenelements (7) oder der ersten Bordwand (4) an. In der Nutzposition ist das zweite Ladeebenenelement (8) an der zweiten Bordwand (5) des Fahrzeugaufbaus (1) befestigt und Oberseiten beider Ladeebenenelemente (7, 8) verlaufen in einer Ebene oder in zwei Ebenen, welche einen Höhenversatz zueinander aufweisen.

## Beschreibung

Die Erfindung betrifft eine Ladeebenenvorrichtung für einen Fahrzeugaufbau.

Die Erfindung betrifft weiterhin einen Fahrzeugaufbau und ein Fahrzeug.

Aus dem Stand der Technik sind allgemein Nutzfahrzeuge bekannt, deren Laderäume in mehrere übereinander angeordnete Ebenen unterteilt sind.

Der Erfindung liegt die Aufgabe zu Grunde eine neuartige Ladeebenenvorrichtung für einen Fahrzeugaufbau, einen neuartigen Fahrzeugaufbau und ein neuartiges Fahrzeug anzugeben.

Die Aufgabe wird erfindungsgemäß gelöst durch
- eine Ladeebenenvorrichtung, welche die im Anspruch 1 angegebenen Merkmale aufweist,
- einen Fahrzeugaufbau, welcher die im Anspruch 13 angegebenen Merkmale aufweist, und
- ein Fahrzeug, welches die im Anspruch 15 angegebenen Merkmale aufweist.

Vorteilhafte Ausgestaltungen der Erfindung sind Gegenstand der abhängigen Ansprüche.

Die erfindungsgemäße Ladeebenenvorrichtung für einen Fahrzeugaufbau umfasst zwei flache und über eine Ebenen-Schwenkachse miteinander gekoppelte und um diese schwenkbare Ladeebenenelemente. Dabei weist ein erstes der Ladeebenenelemente an einem der Ebenen-Schwenkachse abgewandten Ende zumindest eine Schwenk-Befestigungsvorrichtung auf, mittels welcher dieses um eine parallel zur Ebenen-Schwenkachse und zu einem Ladeboden des Fahrzeugaufbaus verlaufende Bord-Schwenkachse schwenkbar an einer ersten Bordwand des Fahrzeugaufbaus befestigt oder befestigbar, insbesondere zerstörungsfrei lösbar befestigbar oder befestigt, ist. Ein zweites der Ladeebenenelemente weist an einem der Ebenen-Schwenkachse abgewandten Ende zumindest eine Befestigungsvorrichtung auf, mittels welcher dieses in einer Nutzposition an einer der ersten Bordwand gegenüberliegenden zweiten Bordwand des Fahrzeugaufbaus befestigbar, insbesondere zerstörungsfrei lösbar befestigt und/oder abstützbar, ist. In einer Verstauposition liegt das erste Ladeebenenelement ausgehend von der Bord-Schwenkachse nach oben gerichtet mit einer Oberseite an der ersten Bordwand an und das zweite Ladeebenenelement liegt ausgehend von der Ebenen-Schwenkachse nach unten gerichtet mit einer Unterseite an einer Unterseite des ersten Ladeebenenelements oder der ersten Bordwand an. In der Nutzposition ist das zweite Ladeebenenelement an der zweiten Bordwand des Fahrzeugaufbaus befestigt, insbesondere zerstörungsfrei lösbar befestigt und/oder abgestützt, und Oberseiten beider Ladeebenenelemente verlaufen in einer Ebene oder in zwei Ebenen, welche einen Höhenversatz zueinander aufweisen.

Die Ladeebenenvorrichtung zeichnet sich in ihrer Verstauposition aufgrund des geklappten Zustands der Ladeebenenelemente durch besonders geringe Abmessungen aus und ist somit raumsparend an der ersten Bordwand lagerbar. Eine Breite des Laderaums unterhalb der Ladeebenenvorrichtung wird dabei aufgrund des "Hochklappens" der beiden zusammengeklappten Ladeebenenelemente in einen Bereich unterhalb der Bord-Schwenkachse nicht beeinträchtigt und steht in der gesamten Breite zur Verfügung. Auch oberhalb der Bord-Schwenkachse ist eine Verringerung der Breite des Laderaums minimiert, so dass eine maximale Beladung des Fahrzeugaufbaus weiterhin zumindest nahezu uneingeschränkt möglich ist. In der Nutzposition können mittels der Ladeebenenvorrichtung in besonders vorteilhafter Weise oberhalb und beabstandet zu dem Ladeboden des Fahrzeugaufbaus ein zweiter, insbesondere planparallel zu dem Ladeboden verlaufender zweiter Ladeboden und eine weitere Ladeebene geschaffen werden. Dies ermöglicht, dass unterhalb des zweiten Ladebodens beispielsweise Transportgüter gelagert werden können, auf welche keine weiteren Transportgüter gestapelt werden können. Auf dem zweiten Ladeboden können dann weitere Transportgüter gelagert werden, so dass eine Höhenausnutzung des Laderaums maximiert werden kann. Dabei ist die Ladeebenenvorrichtung aufgrund ihres schwenkbaren Aufbaus für eine Nutzer des Fahrzeugs in besonders einfacher, sicherer und zuverlässiger Weise zwischen der Verstauposition und der Nutzposition bewegbar.

Unter einer Bordwand werden vorliegend sowohl geschlossene massive Bordwände als auch unterbrochene rahmenförmige Bordwände verstanden. Die rahmenförmigen Bordwände können dabei mit einer Plane verschließbar oder verschlossen sein.

Gemäß einer möglichen Ausgestaltung der Ladeebenenvorrichtung weist das erste Ladeebenenelement an seiner Unterseite einen Hohlraum zur zumindest teilweisen Aufnahme des in der Verstauposition an das erste Ladeebenenelement geschwenkten zweiten Ladeebenenelements auf. Alternativ weist das zweite Ladeebenenelement an seiner Unterseite einen Hohlraum zur zumindest teilweisen Aufnahme des in der Verstauposition an das zweite Ladeebenenelement geschwenkten ersten Ladeebenenelements auf. Diese Ausgestaltung ermöglicht eine Minimierung einer Dicke der Ladeebenenvorrichtung in der Verstauposition und minimiert somit einen Breitverlust im Laderaum zwischen den Bordwänden.

Gemäß einer weiteren möglichen Ausgestaltung der Ladeebenenvorrichtung umfasst diese ein um eine an einem der Ladeebenenelemente angeordnete und in gleicher Richtung wie die Ebenen-Schwenkachse verlaufende Stütz-Schwenkachse schwenkbares Stützelement. Dabei liegt das Stützelement in der Verstauposition ausgehend von der Stütz-Schwenkachse nach unten gerichtet an einer Unterseite des ersten Ladeebenenelements an und ist in der Nutzposition für eine Stützung an dem Ladeboden ausgehend von den Unterseiten der Ladeebenenelemente nach unten gerichtet. Das Stützelement ermöglicht eine Abstützung der beiden Ladeebenenelemente am Ladeboden und somit eine Stabilisierung der Ladeebenenvorrichtung in der Nutzposition. Daraus resultiert wiederum eine erhöhte Tragkraft der Ladeebenenvorrichtung.

Gemäß einer weiteren möglichen Ausgestaltung der Ladeebenenvorrichtung ist das Stützelement in der Verstauposition in dem Hohlraum des ersten Ladeebenenelements und/oder in dem Hohlraum des zweiten Ladeebenenelements angeordnet. Dies ermöglicht eine besonders raumsparende Anordnung des Stützelements ohne Verringerung der nutzbaren Breite des Laderaums zwischen den Bordwänden in der Verstauposition.

Gemäß einer weiteren möglichen Ausgestaltung der Ladeebenenvorrichtung fallen die Ebenen-Schwenkachse und die Stütz-Schwenkachse in einer gemeinsamen Achse zusammen. Dies ermöglicht einen einfachen und mit geringem Material- und Kostenaufwand realisierbaren Aufbau der Ladeebenenvorrichtung mit einem Stützelement.

Gemäß einer weiteren möglichen Ausgestaltung der Ladeebenenvorrichtung ist die Stütz-Schwenkachse derart positioniert, dass diese in der Nutzposition in der Mitte zwischen den Bordwänden angeordnet ist. Somit kann erzielt werden, dass das Stützelement in der Nutzposition in der Mitte zwischen beiden Bordwänden verläuft. Somit kann eine Platzausnutzung maximiert werden und beidseitig vom Stützelement können unter den Ladebodenelementen Ladegutbehälter und/oder Transportpaletten mit normierter Größe, beispielsweise so genannte Euro-Paletten, positioniert werden.

Gemäß einer weiteren möglichen Ausgestaltung der Ladeebenenvorrichtung umfassen die Ladeebenenelemente jeweils einen umlaufenden und Stirnseiten der Ladeebenenelemente bildenden Rahmen, wobei eine in Richtung der Ebenen-Schwenkachse verlaufende Breite des Rahmens eines der Ladeebenenelemente kleiner als eine in Richtung der Ebenen-Schwenkachse verlaufende Breite des Rahmens des anderen Ladeebenenelements ist. Weiterhin ist auch eine Länge des Rahmens des einen der Ladeebenenelemente kleiner als eine Länge des Rahmens des anderen Ladeebenenelements, so dass Stirnseiten des den kleineren Rahmen aufweisenden Ladeebenenelements in der Verstauposition von dem größeren Rahmen umgeben sind. Eine solche Ausbildung der Ladeebenenelemente mit einem Rahmen ermöglicht eine besonders stabile Ausführung der Ladeebenenelemente bei gleichzeitig geringem Materialaufwand und geringem Raumbedarf. Gleichzeitig kann durch die kleinere Ausführung des einen Rahmens eine besonders einfach realisierbare Erzeugung des Hohlraums zur zumindest teilweisen Aufnahme des einen Ladeebenenelements in dem anderen Ladeebenenelement zur Minimierung der Dicke der Ladeebenenvorrichtung in der Verstauposition erreicht werden.

Gemäß einer weiteren möglichen Ausgestaltung der Ladeebenenvorrichtung ist eine in Richtung der Stütz-Schwenkachse verlaufende Breite des Stützelements kleiner als eine lichte Breite des kleineren Rahmens. Hierdurch kann in einfacher Weise die raumsparende Anordnung des Stützelements ohne Verringerung der nutzbaren Breite des Laderaums zwischen den Bordwänden in der Verstauposition realisiert werden.

Gemäß einer weiteren möglichen Ausgestaltung der Ladeebenenvorrichtung ist zwischen Innenseiten der Rahmen oder an einer Oberseite der Rahmen jeweils eine zumindest einen zwischen den Innenseiten des jeweiligen Rahmens befindlichen Freiraum überdeckende flächige Struktur angeordnet. Mittels einer solchen flächigen Struktur wird an den Oberseiten der Rahmen eine Lagerfläche zur Lagerung von Transportgütern geschaffen. Beispielsweise umfasst die flächige Struktur ein Gitter, ein Lochblech, eine Platte und/oder mehrere Quer- und/oder Längsstreben.

Gemäß einer weiteren möglichen Ausgestaltung der Ladeebenenvorrichtung verläuft zumindest bei an den Oberseiten der Rahmen angeordneten flächigen Strukturen in der Verstauposition die Oberseite des Rahmens eines der Ladeebenenelemente in einer Ebene mit einer Unterseite des Rahmens des anderen Ladeebenenelements. Dies ermöglicht eine besonders raumsparende Anordnung der Ladeebenenelemente in der Verstauposition, wobei die beiden Rahmen zur Realisierung dieser Ausgestaltung in besonders vorteilhafter Weise als Gleichteile ausgebildet sein können und somit besonders kostengünstig herstellbar sind.

Gemäß einer weiteren möglichen Ausgestaltung der Ladeebenenvorrichtung weist das Stützelement eine Stütz-Befestigungsvorrichtung zu einer kraft- und/oder formschlüssigen Befestigung an dem Ladeboden auf. Dies ermöglicht eine sichere und zuverlässige Fixierung und/oder Verankerung des Stützelements am Ladeboden, woraus eine weitere Stabilisierung der Ladeebenenvorrichtung in der Nutzposition resultiert.

Gemäß einer weiteren möglichen Ausgestaltung der Ladeebenenvorrichtung ist das Stützelement derart mittels einer Führungsstruktur mit zumindest einem der Ladeebenenelemente gekoppelt, dass sich das Stützelement bei einer Überführung von der Verstauposition in die Nutzposition zwangsgeführt von einer Verstaulage in eine Stützlage und bei einer Überführung von der Nutzposition in die Verstauposition zwangsgeführt von der Stützlage in die Verstaulage bewegt. Dies ermöglicht für einen Nutzer eine besonders einfach und allein ausführbare Überführung der Ladeebenenvorrichtung von der Verstauposition in die Nutzposition und umgekehrt. Gleichzeitig wird sichergestellt, dass das Stützelement in der Stützlage und der Verstaulage stets die richtige Position einnimmt, wodurch die Stabilität der Ladeebenenvorrichtung stets sichergestellt ist, so dass eine Sicherheitserhöhung realisiert werden kann.

Gemäß einer weiteren möglichen Ausgestaltung der Ladeebenenvorrichtung ist eine senkrecht zur Stütz-Schwenkachse verlaufende Länge des Stützelements variabel einstellbar und das Stützelement ist in verschiedenen Längen fixierbar. Dies ermöglicht einerseits, dass die Ladeebenenvorrichtung in ihrer Höhe an unterschiedliche Anforderungen von verschiedenen Fahrzeugaufbauten angepasst werden kann und somit universell in verschiedene Fahrzeugaufbauten nutzbar ist. Auch ist es möglich, eine Höhenverstellung derart durchzuführen, dass die Ladeebenenvorrichtung, beispielsweise in Abhängigkeit einer Höhe von auf dem Ladeboden gelagerten Transportgütern, in unterschiedlichen Höhen innerhalb des Fahrzeugaufbaus positioniert wird. Somit kann die Ausnutzung des Laderaums maximiert werden.

Der erfindungsgemäße Fahrzeugaufbau, insbesondere für ein Nutzfahrzeug, umfasst zumindest einen Ladeboden, eine erste senkrecht zu dem Ladeboden verlaufende Bordwand und eine zweite senkrecht zu dem Ladeboden verlaufende und der ersten Bordwand gegenüberliegende zweite Bordwand. Weiterhin umfasst der Fahrzeugaufbau an den Bordwänden angeordnete Bordwand-Befestigungsstrukturen und zumindest eine vorgenannte Ladeebenenvorrichtung. Dabei ist das erste Ladeebenenelement mittels der Schwenk-Befestigungsvorrichtung an der Bordwand-Befestigungsstruktur der ersten Bordwand und das zweite Ladeebenenelement mittels der Befestigungsvorrichtung an der Bordwand-Befestigungsstruktur der zweiten Bordwand befestigbar oder befestigt, insbesondere zerstörungsfrei lösbar befestigbar oder befestigt und/oder abstützbar oder abgestützt.

Der Fahrzeugaufbau mit der Ladeebenenvorrichtung zeichnet sich aufgrund der Eigenschaften der Ladeebenenvorrichtung durch eine hohe Nutzbarkeit aus. Aufgrund der raumsparenden Lagerung der Ladeebenenvorrichtung in der Verstauposition wird eine Verringerung des Ladevolumens des Fahrzeugaufbaus minimiert. Eine Breite des Laderaums unterhalb der Ladeebenenvorrichtung wird dabei aufgrund des "Hochklappens" der beiden zusammengeklappten Ladeebenenelemente in einen Bereich unterhalb der Bord-Schwenkachse nicht beeinträchtigt und steht in der gesamten Breite zur Verfügung. Auch oberhalb der Bord-Schwenkachse ist eine Verringerung der Breite des Laderaums minimiert, so dass eine maximale Beladung des Fahrzeugaufbaus weiterhin zumindest nahezu uneingeschränkt möglich ist. In der Nutzposition können mittels der Ladeebenenvorrichtung in besonders vorteilhafter Weise oberhalb und beabstandet zu dem Ladeboden des Fahrzeugaufbaus ein zweiter, insbesondere planparallel zu dem Ladeboden verlaufender zweiter Ladeboden und eine weitere Ladeebene geschaffen werden. Dies ermöglicht, dass unterhalb des zweiten Ladebodens beispielsweise Transportgüter gelagert werden können, auf welche keine weiteren Transportgüter gestapelt werden können. Auf dem zweiten Ladeboden können dann weitere Transportgüter gelagert werden, so dass eine Höhenausnutzung des Laderaums maximiert werden kann. Dabei ist die Ladeebenenvorrichtung aufgrund ihres schwenkbaren Aufbaus für eine Nutzer des Fahrzeugs in besonders einfacher, sicherer und zuverlässiger Weise zwischen der Verstauposition und der Nutzposition bewegbar.

Gemäß einer möglichen Ausgestaltung des Fahrzeugaufbaus ist an dem Ladeboden zumindest eine Boden-Befestigungsvorrichtung angeordnet oder in den Ladeboden zumindest eine Boden-Befestigungsvorrichtung integriert. Dabei ist die Boden-Befestigungsvorrichtung zu einer kraft- und/oder formschlüssigen Kopplung mit der Stütz-Befestigungsvorrichtung des Stützelements ausgebildet. Die Boden-Befestigungsvorrichtung ermöglicht eine sichere und zuverlässige Fixierung und/oder Verankerung des Stützelements am Ladeboden.

Das erfindungsgemäße Fahrzeug, insbesondere Nutzfahrzeug, umfasst zumindest einen vorgenannten Fahrzeugaufbau und zeichnet sich dadurch durch die Vorteile des Fahrzeugaufbaus aus.

Ausführungsbeispiele der Erfindung werden im Folgenden anhand von Zeichnungen näher erläutert.

Darin zeigen:
- Figur 1: schematisch eine perspektivische Ansicht eines Teils eines Fahrzeugaufbaus,
- Figur 2: schematisch eine perspektivische Ansicht eines Teils des Fahrzeugaufbaus gemäß Figur 1,
- Figur 3: schematisch eine perspektivische Ansicht einer Ladeebenenvorrichtung in einer Nutzposition,
- Figur 4: schematisch eine perspektivische Ansicht der Ladeebenenvorrichtung gemäß Figur 3 in einer Verstauposition,
- Figur 5: schematisch eine perspektivische Ansicht eines Ausschnitts der Ladeebenenvorrichtung gemäß Figur 3 und einer Bordwand-Befestigungsstruktur,
- Figur 6: schematisch eine Schnittdarstellung eines Ausschnitts der Ladeebenenvorrichtung und der Bordwand-Befestigungsstruktur gemäß Figur 5,
- Figur 7: schematisch eine perspektivische Ansicht eines Ausschnitts der Ladeebenenvorrichtung gemäß Figur 3 und einer Bordwand-Befestigungsstruktur und
- Figur 8: schematisch eine Schnittdarstellung eines Ausschnitts der Ladeebenenvorrichtung und der Bordwand-Befestigungsstruktur gemäß Figur 7.

Einander entsprechende Teile sind in allen Figuren mit den gleichen Bezugszeichen versehen.

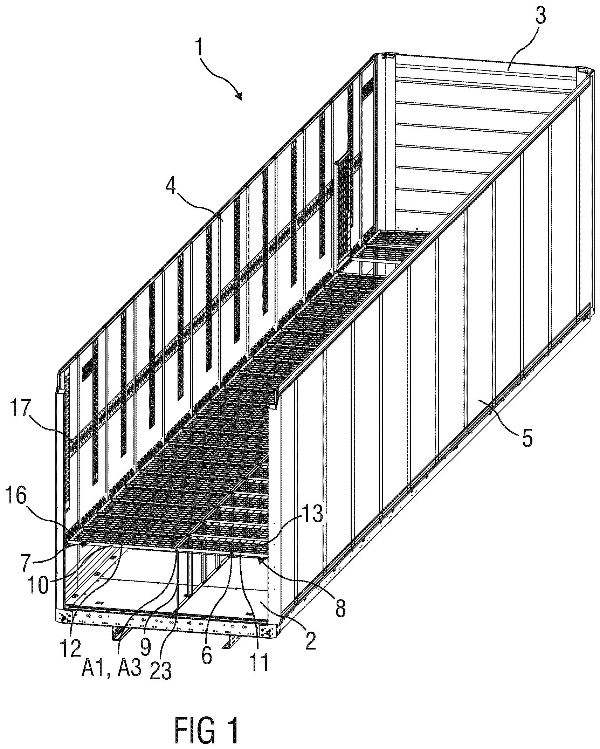

**Figur 1** zeigt eine perspektivische Ansicht eines Teils eines Fahrzeugaufbaus 1 für ein Nutzfahrzeug oder einen Anhänger oder einen Auflieger für ein Nutzfahrzeug.

Der Fahrzeugaufbau 1 umfasst einen Ladeboden 2, eine senkrecht zu diesem verlaufende und an einer vorderen Stirnseite angeordnete Bordwand 3, zwei sich gegenüberliegende seitliche Bordwände 4, 5 und in nicht näher dargestellter Weise ein Dach und eine der Bordwand 3 gegenüberliegende und an einer hinteren Stirnseite angeordnete Tür.

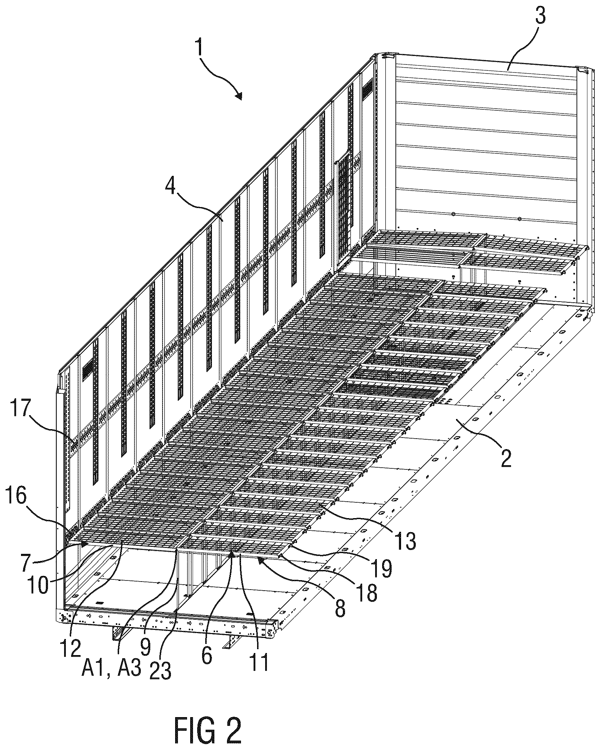

In **Figur 2** ist eine perspektivische Ansicht eines Teils des Fahrzeugaufbaus 1 gemäß Figur 1 dargestellt, wobei die Bordwand 5 nicht dargestellt ist.

Innerhalb des Fahrzeugaufbaus 1 sind über die gesamte Länge des Fahrzeugaufbaus 1 mehrere Ladeebenenvorrichtungen 6 angeordnet, welche identisch ausgebildet sind. Zur Wahrung der Übersichtlichkeit sind in den Figuren 1 und 2 lediglich eine der Ladeebenenvorrichtungen 6 und deren Bestandteile mit Bezugszeichen versehen.

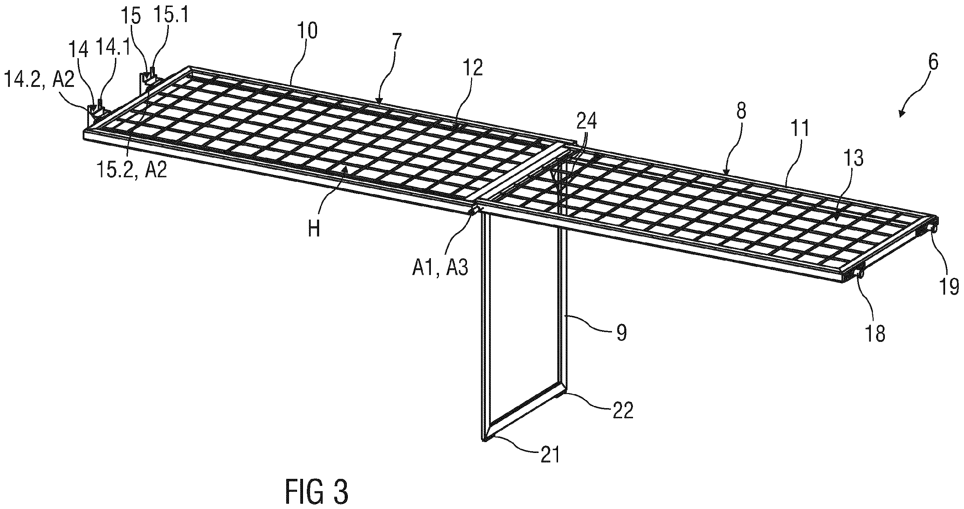

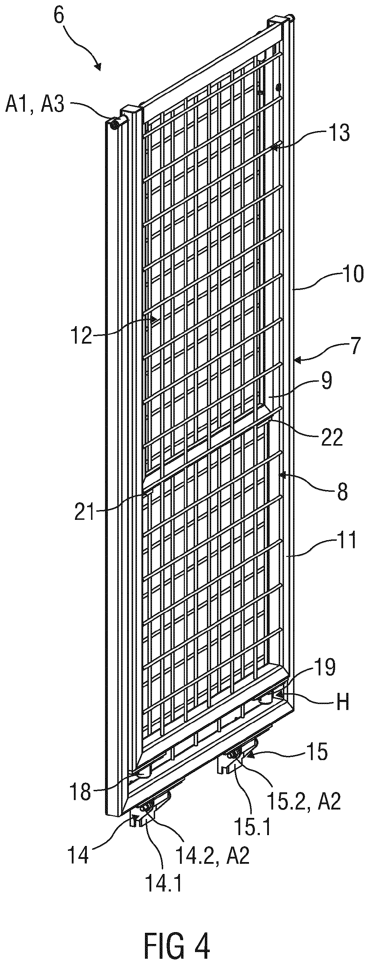

In **Figur 3** und **Figur 4** sind perspektivische Ansichten einer solchen Ladeebenenvorrichtung 6 in einer Nutzposition bzw. einer Verstauposition dargestellt.

Die Ladeebenenvorrichtungen 6 umfassen jeweils zwei flache und über eine Ebenen-Schwenkachse A1 miteinander gekoppelte und um diese schwenkbare Ladeebenenelemente 7, 8 sowie ein Stützelement 9.

In den Figuren 1 und 2 ist ausgehend von der stirnseitigen vorderen Bordwand 3 eine erste Ladeebenenvorrichtung 6 in einer Zwischenposition und eine dritte Ladeebenenvorrichtung 6 in der Verstauposition angeordnet. Die übrigen Ladeebenenvorrichtungen 6 sind in der Nutzposition angeordnet.

Die Ladeebenenelemente 7, 8 umfassen im dargestellten Ausführungsbeispiel jeweils einen umlaufenden und Stirnseiten der Ladeebenenelemente 7, 8 bildenden Rahmen 10, 11. Zwischen den Innenseiten der Rahmen 10, 11 ist jeweils eine den zwischen den Innenseiten des jeweiligen Rahmens 10, 11 befindlichen Freiraum überdeckende flächige Struktur 12, 13 angeordnet, welche vorliegend durch mehrere Längs- und Querstreben gebildet ist. In nicht näher dargestellter Weise können die flächigen Strukturen 12, 13 auch auf einer jeweiligen Oberseite der Rahmen 10, 11 angeordnet sein. Unter der Oberseite der Rahmen 10, 11 wird dabei die Seite verstanden, welche in der Nutzposition vom Ladeboden 2 abgewandt ist. Auch können die flächigen Strukturen 12, 13 beispielsweise als Gitter, Lochblech oder Platte ausgebildet sein. In nicht näher dargestellten Ausgestaltungen können die Strukturen 12, 13 auch entfallen.

Ein erstes Ladeebenenelement 7 der beiden Ladeebenenelemente 7, 8 weist an einem der Ebenen-Schwenkachse A abgewandten Ende zwei Schwenk-Befestigungsvorrichtungen 14, 15 auf, welche jeweils ein Befestigungselement 14.1, 15.1, mittels welcher das Ladeebenenelement 7 an der Bordwand 3 befestigbar, insbesondere einhängbar, ist, und eine Schwenkvorrichtung 14.2, 15.2 zur Realisierung einer parallel zur Ebenen-Schwenkachse A1 und zum Ladeboden 2 verlaufenden Bord-Schwenkachse A2 umfassen. Somit ist das erste Ladeebenenelement 7 um die parallel zur Ebenen-Schwenkachse A1 verlaufende Bord-Schwenkachse A2 schwenkbar an der Bordwand 4 des Fahrzeugaufbaus 1 befestigt oder befestigbar.

Zu einer solchen Befestigung ist an der Bordwand 4 zumindest eine mit den Befestigungselementen 14.1, 15.1 korrespondierende Bordwand-Befestigungsstruktur 16, 17 vorgesehen. Im dargestellten Ausführungsbeispiel sind zwei in unterschiedlichen Höhen an der Bordwand 4 angeordnete Bordwand-Befestigungsstrukturen 16, 17 vorgesehen, um die Ladeebenenelemente 7, 8 in unterschiedlichen Höhen im Fahrzeugaufbau 1 zu befestigen oder mehrere Ladeebenenelemente 7, 8 übereinander anordnen zu können. In nicht näher dargestellter Weise können auch mehr als zwei solcher Befestigungsstrukturen 16, 17 übereinander angeordnet sein, um feinere Abstufungen zur Anordnung der Ladeebenenelemente 7, 8 in unterschiedlichen Höhen zu realisieren.

In einer möglichen Ausgestaltung sind die Befestigungselemente 14.1, 15.1 und die korrespondierenden Bordwand-Befestigungsstrukturen 16, 17 derart ausgebildet, dass die Befestigung des ersten Ladeebenenelements 7 an der Bordwand 4 in einfacher Weise wieder gelöst werden kann und das Ladeebenenelement 7 an einer anderen Position der Bordwand 4 wieder befestigbar ist.

Um bei einer vorgenannten Anordnung der Ladeebenenelemente 7, 8 in unterschiedlichen Höhen stets eine sichere Abstützung dieser realisieren zu können, weist das Stützelement 9 in einer möglichen Ausgestaltung eine senkrecht zur Stütz-Schwenkachse A3 variabel einstellbare verlaufende Länge auf und ist in verschiedenen Längen fixierbar ist. Beispielsweise ist das Stützelement 9 hierzu zumindest abschnittsweise teleskopartig ausgebildet.

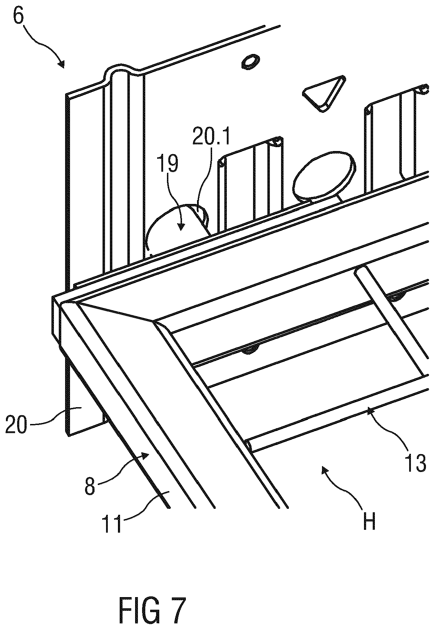

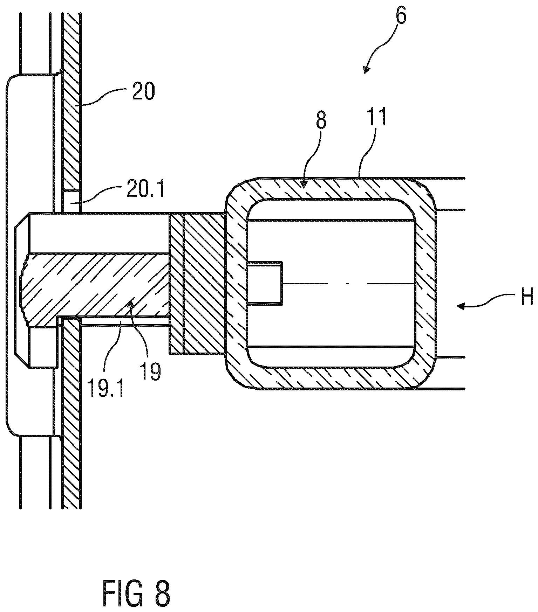

Ein zweites Ladeebenenelement 8 der Ladeebenenelemente 7, 8 weist an einem der Ebenen-Schwenkachse A1 abgewandten Ende zwei Befestigungsvorrichtungen 18, 19 auf, mittels welcher dieses in der Nutzposition an der der ersten Bordwand 4 gegenüberliegenden zweiten Bordwand 5 des Fahrzeugaufbaus 1 befestigbar und/oder abstützbar ist. Zu einer solchen Befestigung und/oder Abstützung ist an der Bordwand 5 zumindest eine mit den Befestigungsvorrichtungen 18, 19 korrespondierende und in den Figuren 7 und 8 näher dargestellte Bordwand-Befestigungsstruktur 20 vorgesehen. Analog zu den Befestigungsstrukturen 16, 17 können auch mehrere, in unterschiedlichen Höhen an der Bordwand 5 angeordnete Bordwand-Befestigungsstrukturen 20 vorgesehen sein, um die Ladeebenenelemente 7, 8 in unterschiedlichen Höhen im Fahrzeugaufbau 1 zu befestigen oder mehrere Ladeebenenelemente 7, 8 übereinander anordnen zu können.

In einer möglichen Ausgestaltung sind die Befestigungsvorrichtungen 18, 19 und die korrespondierenden Bordwand-Befestigungsstruktur 20 derart ausgebildet, dass die Befestigung des zweiten Ladeebenenelements 8 an der Bordwand 5 in einfacher Weise wieder gelöst werden kann und das Ladeebenenelement 8 an einer anderen Position der Bordwand 5 wieder befestigbar ist.

Das Stützelement 9 ist an zumindest einem der Ladeebenenelemente 7, 8 angeordnet und ist um eine in gleicher Richtung wie die Ebenen-Schwenkachse A1 verlaufende Stütz-Schwenkachse A3 schwenkbar. Dabei fallen im dargestellten Ausführungsbeispiel die Ebenen-Schwenkachse A1 und die Stütz-Schwenkachse A3 in einer gemeinsamen Achse zusammen.

In der Nutzposition, welche in Figur 3 näher dargestellt ist, sind die beiden Ladeebenenelemente 7, 8 derart angeordnet, dass das zweite Ladeebenenelement 8 an der Bordwand 5 des Fahrzeugaufbaus 1 befestigt ist und Oberseiten beider Ladeebenenelemente 7, 8 in einer Ebene verlaufen. Gleichzeitig ist das Stützelement 9 für eine Abstützung der Ladeebenenelemente 7, 8 an dem Ladeboden 2 ausgehend von den Unterseiten der Ladeebenenelemente 7, 8 nach unten gerichtet. Um eine Fixierung bzw. Verankerung des Stützelements 9 am Ladeboden 2 zu realisieren, weist das Stützelement 9 zwei Stütz-Befestigungsvorrichtungen 21, 22 zu einer kraft- und/oder formschlüssigen Befestigung an dem Ladeboden 2 auf. An dem Ladeboden 2 kann zumindest eine Boden-Befestigungsvorrichtung 23 angeordnet sein oder in den Ladeboden 2 kann zumindest eine Boden-Befestigungsvorrichtung 23 integriert sein. Dabei ist die Boden-Befestigungsvorrichtung 23 zu einer kraft- und/oder formschlüssigen Kopplung mit den Stütz-Befestigungsvorrichtungen 21, 22 des Stützelements 9 ausgebildet. Beispielsweise ist die Boden-Befestigungsvorrichtung 23 als in den Ladeboden 2 eingelassene oder auf diesem aufbauende Befestigungsschiene ausgebildet. Auch kann die Boden-Befestigungsvorrichtung 23 mehrere in den Ladeboden 2 eingelassene oder auf diesen aufbauende Hülsen, beispielsweise Schraubhülsen, zur kraft- und/oder formschlüssigen Kopplung mit den Stütz-Befestigungsvorrichtungen 21, 22 des Stützelements 9 umfassen.

Alternativ zu dem dargestellten Ausführungsbeispiel können die Ladeebenenelemente 7, 8 in der Nutzposition auch in unterschiedlichen Ebenen verlaufen, welche einen Höhenversatz zueinander aufweisen und insbesondere planparallel zueinander verlaufen. Eine solche Ausführung kann beispielsweise durch mehrere Ebenen-Schwenkachsen A1 und ein zwischen diesem befindlichen Abstandselement erzielt werden.

In der Verstauposition, welche in Figur 4 näher dargestellt ist, liegt das erste Ladeebenenelement 7 ausgehend von der Bord-Schwenkachse A2 nach oben gerichtet mit einer Oberseite an der Bordwand 4 und das zweite Ladeebenenelement 8 liegt ausgehend von der Ebenen-Schwenkachse A1 nach unten gerichtet mit einer Unterseite an einer Unterseite des ersten Ladeebenenelements 7 an. Das Stützelement 9 liegt in der Verstauposition ausgehend von der Stütz-Schwenkachse A3 nach unten gerichtet an der Unterseite des ersten Ladeebenenelements 7 an und ist zwischen beiden Ladeebenenelementen 7, 8 positioniert. Weisen die Ladeebenenelemente 7, 8 keine flächigen Strukturen 12, 13 auf, kann das zweite Ladeebenenelement 8 in der Verstauposition vollständig in das erste Ladeebenenelement 7 "eintauchen" bzw. dieses durchdringen und somit ebenfalls mit seiner Unterseite an der Bordwand 4 anliegen.

Bei einer Überführung der Ladeebenenelemente 7, 8 und des Stützelements 9 von der Nutzposition in die Verstauposition und umgekehrt wird das Stützelement 9 in einer möglichen Ausgestaltung durch die Schwerkraft geführt. In einer anderen möglichen Ausgestaltung ist das Stützelement 9 derart mittels einer Führungsstruktur 24 mit zumindest einem der Ladeebenenelemente 7, 8 gekoppelt, dass sich das Stützelement 9 bei einer Überführung von der Verstauposition in die Nutzposition zwangsgeführt von einer Verstaulage in eine Stützlage und bei einer Überführung von der Nutzposition in die Verstauposition zwangsgeführt von der Stützlage in die Verstaulage bewegt.

Um eine raumsparende Anordnung der Ladeebenenvorrichtung 6 in der Verstauposition zu realisieren, weist das erste Ladeebenenelement 7 an seiner Unterseite einen Hohlraum H zur zumindest teilweisen Aufnahme des in der Verstauposition an das erste Ladeebenenelement 7 geschwenkten Ladeebenenelements 8 und des Stützelements 9 auf. Dieser Hohlraum H kann alternativ auch im zweiten Ladeebenenelement 8 zur Aufnahme des ersten Ladeebenenelements 7 und des Stützelements 9 ausgebildet sein.

Zur Ausbildung dieses Hohlraums H ist eine in Richtung der Ebenen-Schwenkachse A1 verlaufende Breite des Rahmens 11 des Ladeebenenelements 8 kleiner als eine in Richtung der Ebenen-Schwenkachse A1 verlaufende Breite des Rahmens 10 des ersten Ladeebenenelements 7. Auch ist eine Länge des Rahmens 11 kleiner als eine Länge des Rahmens 10. Somit sind Stirnseiten des den kleineren Rahmen 11 aufweisenden Ladeebenenelements 7 in der Verstauposition von dem größeren Rahmen 10 umgeben.

Auch ist eine in Richtung der Stütz-Schwenkachse A3 verlaufende Breite des Stützelements 9 kleiner als eine lichte Breite des kleineren Rahmens 11, so dass das Stützelement 9 in eine lichte Weite des kleineren Rahmens 11 eingeklappt werden kann.

Durch diesen Hohlraum H kann beispielsweise erzielt werden, dass bei an den Oberseiten der Rahmen 10, 11 angeordneten flächigen Strukturen 12, 13 in der Verstauposition die Oberseite des Rahmens 11 des zweiten Ladeebenenelements 8 in einer Ebene mit der Unterseite des Rahmens 10 des ersten Ladeebenenelements 7 verläuft und die Ladeebenenvorrichtung 6 somit in der eingeklappten Verstauposition eine besonders geringe Dicke aufweisen.

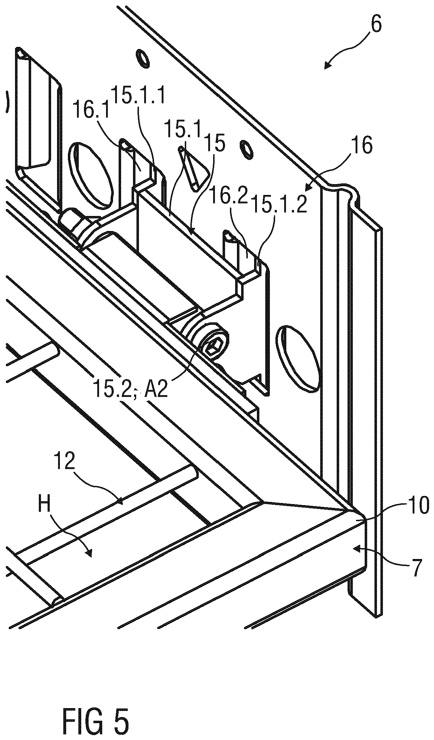

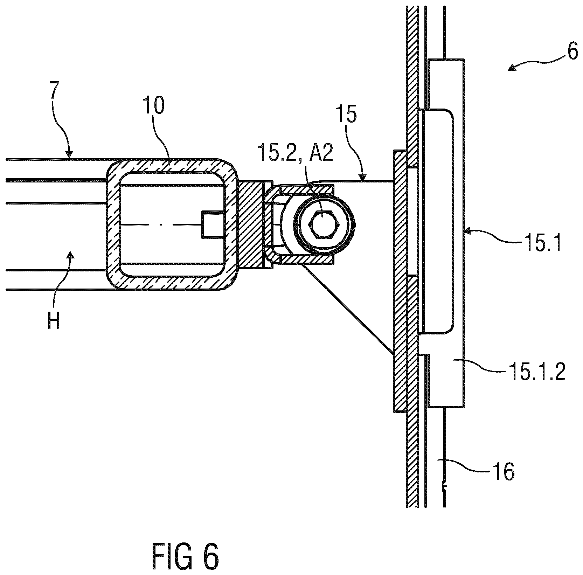

In den **Figuren 5** **und** 6 ist in verschiedenen Ansichten ein Ausschnitt der Ladeebenenvorrichtung 2 gemäß Figur 3 im Bereich der Schwenk-Befestigungsvorrichtung 15 und der Bordwand-Befestigungsstruktur 16 dargestellt.

Das Befestigungselement 15.1 der Schwenk-Befestigungsvorrichtung 15 weist zwei Hakenelemente 15.1.1, 15.1.2 auf, welche in dazu korrespondierende Öffnungen 16.1, 16.2 der Bordwand-Befestigungsstruktur 16 einhakbar sind. Das Befestigungselement 14.1 ist analog zum Befestigungselement 15.1 ausgebildet.

In den **Figuren 7** **und** **8** ist in verschiedenen Ansichten ein Ausschnitt der Ladeebenenvorrichtung 2 gemäß Figur 3 im Bereich der Befestigungsvorrichtung 19 und der Bordwand-Befestigungsstruktur 20 dargestellt.

Die Befestigungsvorrichtung 19 ist dabei jeweils als Bolzen ausgebildet, welcher an seiner Unterseite eine Materialaussparung 19.1 aufweist. Die Bordwand-Befestigungsstruktur 20 weist eine zu der Befestigungsvorrichtung 19 korrespondierende Öffnungen 20.1 auf, in welche die Befestigungsvorrichtung 19 einführbar ist und in der Materialaussparung 19.1 einhakbar ist. Die Befestigungsstruktur 18 ist analog zur Befestigungsstruktur 19 ausgebildet. In nicht näher dargestellten Ausführungsbeispielen kann die Befestigungsvorrichtung 19 auch in anderer Form ausgebildet sein. Auch können hierbei gefederte oder anderweitig bewegliche Teile an der Befestigungsvorrichtung 19 zu deren Fixierung an oder in der Bordwand-Befestigungsstruktur 20 vorgesehen sein.

Wie den Figuren 5 bis 8 zu entnehmen ist, sind die Bordwand-Befestigungsstrukturen 16, 17, 20 in den dargestellten Ausführungsbeispielen als Gleichteile, insbesondere in Form einer flachen Schiene, mit den Öffnungen 16.1, 16.2, 20.1 ausgebildet.

### BEZUGSZEICHENLISTE

- 1: Fahrzeugaufbau
- 2: Ladeboden
- 3: Bordwand
- 4: Bordwand
- 5: Bordwand
- 6: Ladeebenenvorrichtung
- 7: Ladeebenenelement
- 8: Ladeebenenelement
- 9: Stützelement
- 10: Rahmen
- 11: Rahmen
- 12: Struktur
- 13: Struktur
- 14: Schwenk-Befestigungsvorrichtung
- 14.1: Befestigungselement
- 14.2: Schwenkvorrichtung
- 15: Schwenk-Befestigungsvorrichtung
- 15.1: Befestigungselement
- 15.1.1: Hakenelement
- 15.1.2: Hakenelement
- 15.2: Schwenkvorrichtung
- 16: Bordwand-Befestigungsstruktur
- 16.1: Öffnung
- 16.2: Öffnung
- 17: Bordwand-Befestigungsstruktur
- 18: Befestigungsvorrichtung
- 19: Befestigungsvorrichtung
- 19.1: Materialaussparung
- 20: Bordwand-Befestigungsstruktur
- 20.1: Öffnung
- 21: Stütz-Befestigungsvorrichtung
- 22: Stütz-Befestigungsvorrichtung
- 23: Boden-Befestigungsvorrichtung
- 24: Führungsstruktur

- A1: Ebenen-Schwenkachse
- A2: Bord-Schwenkachse
- A3: Stütz-Schwenkachse
- H: Hohlraum

## Patentansprüche

1. Ladeebenenvorrichtung (6) für einen Fahrzeugaufbau (1) mit zwei flachen und über eine Ebenen-Schwenkachse (A1) miteinander gekoppelten und um diese schwenkbaren Ladeebenenelementen (7, 8), wobei
- ein erstes der Ladeebenenelemente (7, 8) an einem der Ebenen-Schwenkachse (A1) abgewandten Ende zumindest eine Schwenk-Befestigungsvorrichtung (14, 15) aufweist, mittels welcher dieses um eine parallel zur Ebenen-Schwenkachse (A1) und zu einem Ladeboden (2) des Fahrzeugaufbaus (1) verlaufende Bord-Schwenkachse (A2) schwenkbar an einer ersten Bordwand (4) des Fahrzeugaufbaus (1) befestigt oder befestigbar ist,
- ein zweites der Ladeebenenelemente (7, 8) an einem der Ebenen-Schwenkachse (A1) abgewandten Ende zumindest eine Befestigungsvorrichtung (18, 19) aufweist, mittels welcher dieses in einer Nutzposition an einer der ersten Bordwand (4) gegenüberliegenden zweiten Bordwand (5) des Fahrzeugaufbaus (1) befestigbar ist,
- in einer Verstauposition das erste Ladeebenenelement (7) ausgehend von der Bord-Schwenkachse (A2) nach oben gerichtet mit einer Oberseite an der ersten Bordwand (4) anliegt und das zweite Ladeebenenelement (8) ausgehend von der Ebenen-Schwenkachse (A1) nach unten gerichtet mit einer Unterseite an einer Unterseite des ersten Ladeebenenelements (7) oder der ersten Bordwand (4) anliegt und
- in der Nutzposition das zweite Ladeebenenelement (8) an der zweiten Bordwand (5) des Fahrzeugaufbaus (1) befestigt ist und Oberseiten beider Ladeebenenelemente (7, 8) in einer Ebene oder in zwei Ebenen, welche einen Höhenversatz zueinander aufweisen, verlaufen.

2. Ladeebenenvorrichtung (6) nach Anspruch 1, wobei
- das erste Ladeebenenelement (7) an seiner Unterseite einen Hohlraum (H) zur zumindest teilweisen Aufnahme des in der Verstauposition an das erste Ladeebenenelement (7) geschwenkten zweiten Ladeebenenelements (8) aufweist oder
- das zweite Ladeebenenelement (8) an seiner Unterseite einen Hohlraum (H) zur zumindest teilweisen Aufnahme des in der Verstauposition an das zweite Ladeebenenelement (8) geschwenkten ersten Ladeebenenelements (7) aufweist.

3. Ladeebenenvorrichtung (6) nach Anspruch 1 oder 2, umfassend ein um eine an einem der Ladeebenenelemente (7, 8) angeordnete und in gleicher Richtung wie die Ebenen-Schwenkachse (A1) verlaufende Stütz-Schwenkachse (A3) schwenkbares Stützelement (9), wobei das Stützelement (9)
- in der Verstauposition ausgehend von der Stütz-Schwenkachse (A3) nach unten gerichtet an einer Unterseite des ersten Ladeebenenelements (7) anliegt und
- in der Nutzposition für eine Stützung an dem Ladeboden (2) ausgehend von den Unterseiten der Ladeebenenelemente (7, 8) nach unten gerichtet ist.

4. Ladeebenenvorrichtung (6) nach Anspruch 3, wobei das Stützelement (9) in der Verstauposition in dem Hohlraum (H) des ersten Ladeebenenelements (7) und/oder in dem Hohlraum (H) des zweiten Ladeebenenelements (8) angeordnet ist.

5. Ladeebenenvorrichtung (6) nach einem der vorhergehenden Ansprüche, wobei die Ebenen-Schwenkachse (A1) und die Stütz-Schwenkachse (A3) in einer gemeinsamen Achse zusammenfallen.

6. Ladeebenenvorrichtung (6) nach einem der vorhergehenden Ansprüche, wobei
- die Ladeebenenelemente (7, 8) jeweils einen umlaufenden und Stirnseiten der Ladeebenenelemente (7, 8) bildenden Rahmen (10, 11) umfassen,
- eine in Richtung der Ebenen-Schwenkachse (A1) verlaufende Breite des Rahmens (10, 11) eines der Ladeebenenelemente (7, 8) kleiner als eine in Richtung der Ebenen-Schwenkachse (A1) verlaufende Breite des Rahmens (10, 11) des anderen Ladeebenenelements (7, 8) ist,
- eine Länge des Rahmens (10, 11) des einen der Ladeebenenelemente (7, 8) kleiner als eine Länge des Rahmens (10, 11) des anderen Ladeebenenelements (7, 8) ist und
- Stirnseiten des den kleineren Rahmen (10, 11) aufweisenden Ladeebenenelements (7, 8) in der Verstauposition von dem größeren Rahmen (10, 11) umgeben sind.

7. Ladeebenenvorrichtung (6) nach Anspruch 6, wobei eine in Richtung der Stütz-Schwenkachse (A3) verlaufende Breite des Stützelements (9) kleiner ist als eine lichte Breite des kleineren Rahmens (10, 11).

8. Ladeebenenvorrichtung (6) nach Anspruch 6 oder 7, wobei zwischen Innenseiten der Rahmen (10, 11) oder an einer Oberseite der Rahmen (10, 11) jeweils eine zumindest einen zwischen den Innenseiten des jeweiligen Rahmens (10, 11) befindlichen Freiraum überdeckende flächige Struktur (12, 13) angeordnet ist.

9. Ladeebenenvorrichtung (6) nach Anspruch 8, wobei zumindest bei an den Oberseiten der Rahmen (10, 11) angeordneten flächigen Strukturen (12, 13) in der Verstauposition die Oberseite des Rahmens (10, 11) eines der Ladeebenenelemente (7, 8) in einer Ebene mit einer Unterseite des Rahmens (10, 11) des anderen Ladeebenenelements (7, 8) verläuft.

10. Ladeebenenvorrichtung (6) nach einem der vorhergehenden Ansprüche, wobei das Stützelement (9) zumindest eine Stütz-Befestigungsvorrichtung (21, 22) zu einer kraft- und/oder formschlüssigen Befestigung an dem Ladeboden (2) aufweist.

11. Ladeebenenvorrichtung (6) nach einem der vorhergehenden Ansprüche, wobei das Stützelement (9) derart mittels einer Führungsstruktur (24) mit zumindest einem der Ladeebenenelemente (7, 8) gekoppelt ist, dass sich das Stützelement (9) bei einer Überführung von der Verstauposition in die Nutzposition zwangsgeführt von einer Verstaulage in eine Stützlage und bei einer Überführung von der Nutzposition in die Verstauposition zwangsgeführt von der Stützlage in die Verstaulage bewegt.

12. Ladeebenenvorrichtung (6) nach einem der vorhergehenden Ansprüche, wobei eine senkrecht zur Stütz-Schwenkachse (A3) verlaufende Länge des Stützelements (9) variabel einstellbar und das Stützelement (9) in verschiedenen Längen fixierbar ist.

13. Fahrzeugaufbau (1), insbesondere für ein Nutzfahrzeug, umfassend
- zumindest einen Ladeboden (2),
- eine erste senkrecht zu dem Ladeboden (2) verlaufende Bordwand (4),
- eine senkrecht zu dem Ladeboden (2) verlaufende und der ersten Bordwand (4) gegenüberliegende zweite Bordwand (5),
- an den Bordwänden (4, 5) angeordnete Bordwand-Befestigungsstrukturen (16, 17, 20) und
- zumindest eine Ladeebenenvorrichtung (6) nach einem der vorhergehenden Ansprüche, wobei das erste Ladeebenenelement (7) mittels der Schwenk-Befestigungsvorrichtung (14, 15) an der Bordwand-Befestigungsstruktur (16, 17) der ersten Bordwand (4) und das zweite Ladeebenenelement (8) mittels der Befestigungsvorrichtung (18, 19) an der Bordwand-Befestigungsstruktur (20) der zweiten Bordwand (5) befestigbar oder befestigt ist.

14. Fahrzeugaufbau (1) nach Anspruch 13, wobei
- an dem Ladeboden (2) zumindest eine Boden-Befestigungsvorrichtung (23) angeordnet oder in den Ladeboden (2) zumindest eine Boden-Befestigungsvorrichtung (23) integriert ist und
- die Boden-Befestigungsvorrichtung (23) zu einer kraft- und/oder formschlüssigen Kopplung mit der Stütz-Befestigungsvorrichtung (21, 22) des Stützelements (9) ausgebildet ist.

15. Fahrzeug, insbesondere Nutzfahrzeug, umfassend zumindest einen Fahrzeugaufbau (1) nach Anspruch 13 oder 14.
